# EUROPEAN PATENT SPECIFICATION

(11) **EP 1 360 818 B1**
(45) Date of publication and mention of the grant of the patent: **08.06.2005**
(21) Application number: 02718113.0
(22) Date of filing: 05.02.2002
(51) Int. Cl.: H04L 29/06

(54) **COMPRESSION METHOD, TRANSMITTER AND RECEIVER FOR RADIO DATA COMMUNICATION**
KOMPRESSIONSVERFAHREN, -SENDER UND -EMPFÄNGER FÜR FUNKDATENKOMMUNIKATION
PROCEDE DE COMPRESSION, EMETTEUR ET RECEPTEUR DE COMMUNICATION RADIO DE DONNEES

(30) Priority: 07.02.2001 GB 0103098
(43) Date of publication of application: 12.11.2003
(73) Proprietor: MOTOROLA, INC., Schaumburg, IL 60196 (US)
(72) Inventor: DEMETRESCU, Cristian, Twickenham, Middlesex TW2 5LY (GB); CHEUNG, Colleen, Yue, Ling, Swindon, Wiltshire SN5 8QU (GB); SESMUN, Amardiya, Swindon Warwickshire SN5 8PH (GB); FOSTER, Gerry, T., Swindon, Wiltshire SN25 4GF (GB)
(74) Representative: Jepsen, Rene Pihl
(86) International application number: PCT/EP2002/001328
(87) International publication number: WO 2002/069599

(56) References cited:
- WO-A-00/49748
- HANDLEY M: "GERM: GENERIC RTP MULTIPLEXING" INTERNET ENGINEERING TASK FORCE, XX, XX, 11 November 1998 (1998-11-11), pages 1-7, XP002139359
- DEGERMARK M ET AL: "LOW-LOSS TCP/IP HEADER COMPRESSION FOR WIRELESS NETWORKS" WIRELESS NETWORKS, ACM, US, vol. 3, no. 5, 1 October 1997 (1997-10-01), pages 375-387, XP000728935 ISSN: 1022-0038
- MAJUMDAR I ET AL: "Text-based Compression Using Cache and Blank Approach (TCCB)" INTERNET DRAFT, [Online] July 2001 (2001-07), pages 1-25, XP002205008 Retrieved from the Internet: <URL:http://ftp.fi.muni.cz/pub/internet-dr afts/draft-ziyad-rohc-tccb-00.txt?E=D> [retrieved on 2002-07-05]
- JIAN JUN WU ET AL: "Lightweight SIP/SDP Compression Scheme (LSSCS)" APOC 2001: ASIA-PACIFIC OPTICAL AND WIRELESS COMMUNICATIONS, vol. 4586, 12 - 15 November 2001, pages 67-76, XP008005555 Beijing, China ISSN: 0277-786X
- HANNU H ET AL: "Application signaling over cellular links" INTERNET DRAFT, [Online] 17 November 2000 (2000-11-17), XP002205009 Retrieved from the Internet: <URL:http://alternic.net/drafts/drafts-h-i /draft-hannu-rohc-signaling-cellular-00.tx t> [retrieved on 2002-07-05]

## Description

### Field of the Invention

This invention relates to compression schemes used in radio data communications applications such as cellular telephony.

### Background of the Invention

In the field of this invention it is known that in cellular radio communications systems, for example those based on the GSM (Global System for Mobile Communications) or UMTS (Universal Mobile Telecommunications System) standards, existing data compression algorithms act at the transport, network and link layers but they do not perform any compression above the transport layer. Existing compression algorithms perform binary compression, (i.e., removing redundancy in the bits included in each packet).

An example of a compression scheme is given in Degermark M et Al.; "Low-loss TCP/IP Header Compression for Wireless Networks", Wireless Networks, ACM, US, vol.3,no.5, 1 October 1997 (1997-10-01), pages 375-387, XP000728935 ISSN: 1022-0038. The article discloses a header compression scheme applied to communication using the TCP/IP protocol.

Current data compression algorithms compress only the packet headers used at each layer while other algorithms perform binary compression of the data payload.

However, this approach has the disadvantage(s) that binary compression is limited because it does not remove the information redundancy generated at the application layer. Binary compression also increases the packet processing time especially when it is done hop-by-hop which is the case with most header compression algorithms. For example, in UMTS the packet data convergence protocol (PDCP) performs only binary header compression and no payload compression. This limits the compression efficiency that can be achieved.

A need therefore exists for a compression scheme for radio data communications wherein the abovementioned disadvantage(s) may be alleviated.

### Statement of Invention

In accordance with a first aspect of the present invention there is provided a method of communicating a Session Initiation Protocol and Session Description Protocol (SIP/SDP) message from a transmitter to a receiver in a data communication system using SIP/SDP as claimed in claim 1.

In accordance with a second aspect of the present invention there is provided a transmitter for use in communicating a SIP/SDP message therefrom to a receiver in a data communication system using SIP/SDP as claimed in claim 5.

In accordance with a third aspect of the present invention there is provided a receiver for receiving a SIP/SDP message from a transmitter in a data communication system using SIP/SDP as claimed in claim 9.

### Brief Description of the Drawings

One Session Initiation Protocol (SIP) / Session Description Protocol (SDP) compression scheme incorporating the present invention will now be described, by way of example only, with reference to the accompanying drawing(s), in which:
FIG. 1 shows a block diagram of a protocol stack for for use in the compression scheme;
FIG. 2 shows a block diagram of a header for use in the compression scheme;
FIG. 3 shows a block diagram of an encapsulated SIP/SDP Message for use in the compression scheme; and
FIG. 4 shows a schematic diagram of an example of pre-cache procedure for use in the compression scheme within a UMTS system;
FIG. 5 shows a block schematic diagram of a UMTS radio communication system including a transmitter and a receiver for implementing the compression scheme of FIG 1 - FIG. 4.

### Description of Preferred Embodiment

Session Initiation Protocol (SIP) is one of the candidates used for multimedia call control signalling. The present invention proposes use of the SIP protocol together with the session description protocol (SDP) in a lightweight compression scheme. The current SIP message size could be in excess of 1000 bytes due to its textual HTTP encoding. This is, for example, the case of a SIP message containing a Record-Route header field. In this case the SIP message will pick up the Request-URLs of all the SIP servers on the path of this message, therefore leading to a large SIP message size (unlimited in theory). Also the SIP URL encoding contains many header extensions and options, which could increase the SIP message size.

While the large SIP message size might not be a problem for networks with plenty of bandwidth available, this is not the case for many access networks. For example wireless access networks (e.g. UMTS, GSM) have scarce bandwidth and therefore the transmission of current SIP messages over the air interface is not efficient. Also the low-end modems used to connect computers (particularly laptop computers) to the Internet have the same problem due to bandwidth shortage. In all these cases the transmission of SIP messages in the current format will render long call set up times and inefficient use of the transmission medium.

The present invention proposes a new Lightweight SIP/SDP Compression Scheme (LSSCS), which will be described in detail below, which allows these disadvantages to be alleviated or overcome.

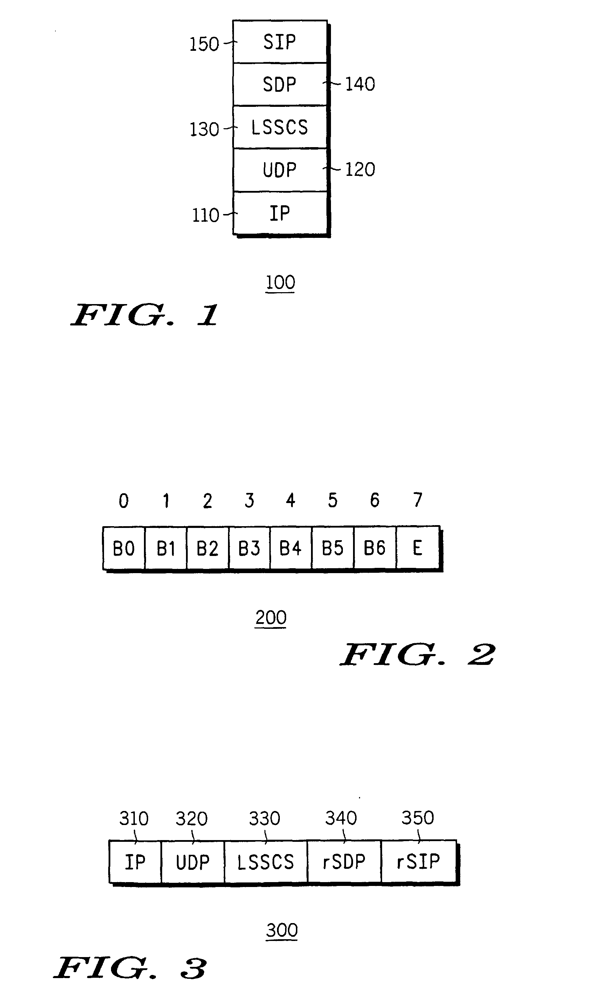

A User Datagram Protocol / Internet Protocol (UDP/IP) protocol stack for use with LSSCS is shown in FIG. 1. It will be understood that the UDP/IP stack illustrated in FIG. 1 is only for example purposes and does not restrict the applicability of the LSSCS with any other transport/network layers.

As shown in FIG. 1, the UDP/IP stack 100 includes successive layers of internet protocol (IP) 110, User Datagram Protocol (UDP) 120, Lightweight SIP/SDP Compression Scheme (LSSCS) 130, Session Description Protocol (SDP) 140 and Session Initiation Protocol (SIP) 150.

The packet overhead introduced by the LSSCS layer 130 is shown in FIG. 2.

As shown in FIG. 2, the LSSCS header 200 is a 8-bit byte in which bits 0-6 (B0-B6) are data bits, and bit 7 is an extension (E) bit. Each data bit B0-B6 in the LSSCS header points to a field in either the SIP or the SDP messages. The LSSCS header is octet aligned (i.e., comprises an integer number of octets). If the extension bit is set to 1 then another LSSCS header octet is added to the LSSCS header. When E = 0 then no extension header is added. As SIP/SDP messages have extension and option fields, the LSSCS header is flexible, and can therefore cover all possible message formats.

The meaning of the bits B0 to B6 is as follows. Assuming that the bit Bn addresses a particular field in the SIP/SDP message, and indicates the presence or absence that particular field in the SIP/SDP message, as follows:
Bn = 1 indicates that the corresponding SIP/SDP field is present in the SIP/SDP message, or
Bn = 0 indicates that the corresponding SIP/SDP field is removed from the SIP/SDP because it is redundant. In this case the LSSCS receiver can recover the removed field by using additional information already available.

Assuming the protocol stack shown in FIG. 1, the LSSCS encapsulated SIP/SDP message is shown in FIG. 3, where IP (310) is the IP Header, UDP (320) is the UDP header, LSSCS (330) is the LSSCS header (including any extensions), and rSDP (340) and rSIP (350) are the reduced SDP and SIP messages respectively.

It is proposed that upon first registering of a mobile terminal with the call control state function (CSCF), the mobile terminal obtains a table, which provides a mapping of the CSCF's association of bits in the LSSCS header to a corresponding SIP/SDP field.

An example of a possible mapping is shown in Table 1 below:

**Table 1:**

| LSSCS - SIP/SDP Mapping Information | |
|---|---|
| LSSCS header bits | SIP/SDP fields |
| B0 | From |
| B1 | To |
| B2 | Call-ID |
| B3 | Content-Type |
| B4 | Via |
| B5 | Session Name |
| B6 | Session and Media Information |

Referring to the above table, if B0=0, B1=1, B2=0, B3=0, B4=0, B5=1, B6=1, the CSCF is then able to understand from the LSSCS header that the rSIP and rSDP messages from the mobile terminal are as below, assuming the message is an INVITE message:

| | |
|---|---|
| INVITE sip:schooler@vlsi.caltech.edu SIP/2.0 | |
| To: sip:schooler@cs.caltech.edu | rSIP message |
| s=Mbone Audio | rSDP message |
| i=Discussion of Mbone Engineering Issues | |

This is the compressed SIP/SDP message. The CSCF also then reconstructs the message providing mandatory SIP and SDP fields, and providing any optional fields that it is able to obtain information on. The complete uncompressed message sent from the CSCF is then:

| | |
|---|---|
| INVITE sip:schooler@vlsi.caltech.edu SIP/2.0 | |
| From: sip:mjh@isi.edu | *SIP message* |
| To: sip:schooler@cs.caltech.edu | |
| Call-ID: 62729-27@128.16.64.19 | |
| Content-Type: application/sdp | |
| Via: SIP/2.0/UDP/ 128.16.64.19 | |
| s=Mbone Audio | *SDP message* |
| i=Discussion of Mbone Engineering Issues | |

It is clear that the compressed SIP/SDP message is much smaller than the original uncompressed message.

### Pre-Caching Techniques used in LSSCS

The LSSCS compression efficiency depends on the amount of information removed from a SIP/SDP message. This, in turn depends on the possibility of reconstructing the missing information from the pre-cached information stored. In some cases, a 10-fold reduction in the SIP/SDP message size can be achieved. Further compression efficiency can be achieved by using the lower layer compression algorithm together with LSSCS.

Other network entities and protocol layers provide the pre-cached information used by the LSSCS receiver to reconstruct the original SIP/SDP message. In the context of a UMTS network, the user equipment (UE) and the call control state function (CSCF) will implement the LSSCS. The callee/caller URL can be reconstructed by using the IP destination/source addresses respectively and therefore they can be removed from the SIP messages.

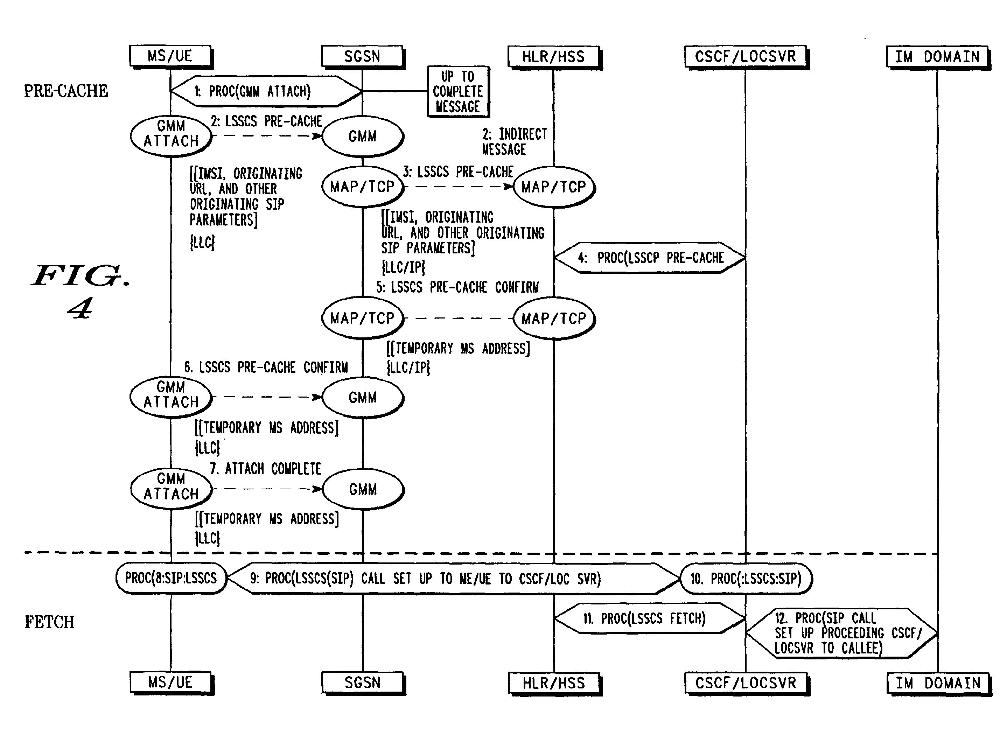

An example of a pre-cache procedure within the UMTS system is shown in FIG. 4.

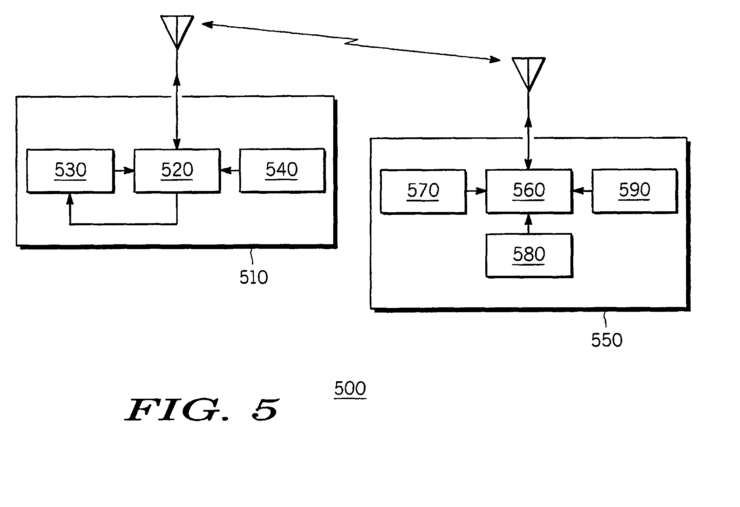

Referring now also to FIG. 5, a system 500 for implementing the SIP/SDP compression scheme described above, includes a transmitter in the form of mobile user equipment (UE) 510 and a receiver in the form of a UMTS Radio Network Controller (RNC) 550. The UE is controlled by a processor 520 and the RNC is controlled by a processor 560. The RNC 550 holds a mapping table 570 of correspondence between header bits and message elements that are redundant (such as the table 1 described above) which it communicates to the UE 510 when the UE 510 first registers with the RNC. The UE 510 stores the received mapping table in a memory 530.

When the UE 510 wishes to communicate a message 540 to the RNC 550, it first removes from the message any element that is indicated in the stored mapping table 530 and constructs a header (such as that shown in FIG. 2) indicating which elements of the original message have been removed. The UE 510 then transmits the compressed message together with the header in the encapsulated form shown in FIG. 3.

When the compressed message is received at the RNC 550, the RNC compares the header indicating absent information with the mapping table 570 and re-inserts into the compressed message the indicated, absent, redundant information which it already has pre-cached in store 580. Thus, the RNC re-constructs the original message 590.

Thus, in summary, it will be understood that LSSCS is a new compression algorithm located at the application layer and acting on the SIP/SDP message content. LSSCS may be considered a lightweight compression algorithm as it only adds a small extendable byte-aligned header to the reduced SIP/SDP message.

It will be understood that with LSSCS and its associated Pre-Cache / Fetch procedures operational, over-air SIP call set up times can be considerably reduced, making SIP cost effective for operation over a 3GPP radio interface and comparable in performance to a 3GPP 24.008 CC based call.

It will be further appreciated that with LSSCS packet voice calls become a cost effective alternative to circuit-switched ones, reducing the need for partnerships between system suppliers and switch suppliers and the need to provide two separate domain interfaces towards the 3GPP RNC/BSC.

It will be understood that LSSCS does not modify in any way the SIP and SDP protocols. Both the receiver and the transmitter of the SIP messages implement standard SIP and SDP protocols, so requiring minimal standardisation effort required.

Thus, it will be appreciated that:
- LSSCS introduces a radical process to reduce substantially the SIP/SDP URL.
- LSSCS uses pre-cached information from different networks entities (e.g. SIP location server, DNS server, Media Gateway, Security Server and DHCP server) as well as from other protocol entities (e.g. UDP/IP, IP routing and Mobility Management).
   The LSSCS caches this information locally and uses it to process the SIP/SDP messages. Examples of pre-cached information are shown below.
- LSSCS can be used independently of the other compression algorithms used at the lower layers of the protocol stack. The compression algorithms can be switched on and off at each protocol layer independently and any combination of them is possible. For example, one can use both LSSCS at the application layer and any UDP/IP compression scheme at the PDCP layer in UMTS, achieving an even better compression efficiency.
- LSSCS compression is done only end-to-end as opposed to hop-by-hop compression schemes. Therefore LSSCS is a lightweight compression algorithm which requires little additional packet processing power and only at the end points.

In conclusion, it will be appreciated that the SIP/SDP compression scheme described above provides the following advantages:
- LSSCS removes information redundancy generated at the application layer.
- LSSCS can achieve 100% compression efficiency for the redundant SIP and SDP URL fields. The redundant information is removed at the transmitter and regenerated by the receiver using pre-cached information.

## Claims

1. A method of communicating a Session Initiation Protocol and Session Description Protocol, SIP/SDP, message from a transmitter (510) to a receiver (550) in a data communication system using SIP/SDP, the method comprising the steps of:
at the receiver (550), pre-caching at least one element of the SIP/SDP message before transmission of the SIP/SDP message from the transmitter (510), at the transmitter (510), removing from the SIP/SDP message at least one element thereof and inserting into the SIP/SDP message an indication (200) of absence of the at least one removed element; and
at the receiver(550), inserting into a SIP/SDP message received from the transmitter (510) said at least one element held at the receiver (550) in replacement for said at least one element whose absence is indicated; and
before transmission of the SIP/SDP message from the transmitter (510), receiving at the transmitter (510) a predetermined table of mapping between elements of SIP/SDP messages and indications of absence thereof.

2. The method as claimed in claim 1 wherein the indication (200) of absence comprises a binary header in which at least one bit indicates the presence/absence of the at least one element.

3. The method as claimed in claim 1 or 2 wherein the indication (200) of absence further comprises an indication of whether a further indication of absence indicates the absence of at least one further element.

4. The method as claimed in any preceding claim wherein the data communication system is a UMTS system.

5. A transmitter (510) for use in communicating a Session Initiation Protocol and Session Description Protocol, SIP/SDP, message therefrom to a receiver (550) in a data communication system using SIP/SDP, the transmitter (510)comprising:
means for receiving, before transmission of the SIP/SDP message, a predetermined table of mapping between elements of SIP/SDP messages and indications of absence thereof;
means for removing from the SIP/SDP message at least one element thereof; and
means for inserting into the SIP/SDP message an indication (200) of absence of the at least one removed element.

6. The transmitter (510) as claimed in claim 6 wherein the indication of absence comprises a binary header in which at least one bit indicates the presence/absence of the at least one element.

7. The transmitter (510) as claimed in claim 5 or 6 wherein the indication of absence further comprises an indication of whether a further indication of absence indicates the absence of at least one further element.

8. The transmitter (510) as claimed in any one of claims 5-7 wherein the data communication system is a UMTS system.

9. A receiver (550) for receiving a Session Initiation Protocol and Session Description Protocol, SIP/SDP, message from a transmitter (510) in a data communication system using SIP/SDP, the receiver (550) comprising:
means for, before transmission of the SIP/SDP message from the transmitter (510), pre-caching at the receiver (550) at least one element of the SIP/SDP message;
at the receiver (550), means for receiving from the transmitter (510) a SIP/SDP message including an indication (200) of absence of at least one element from the received SIP/SDP message; and means for inserting into the received SIP/SDP message said at least one element held at the receiver (550) in replacement for said at least one element whose absence is indicated; and
means for sending to the transmitter (510), before transmission of the SIP/SDP message therefrom, a predetermined table of mapping between elements of SIP/SDP messages and indications of absence thereof.

10. The receiver (550) as claimed in claim 9 wherein the indication (200) of absence comprises a binary header in which at least one bit indicates the presence/absence of the at least one element.

11. The receiver (550) as claimed in claim 9 or 10 wherein the indication (200)of absence further comprises an indication of whether a further indication of absence indicates the absence of at least one further element.

12. The receiver (550) as claimed in any one of claims 9-11 wherein the data communication system is a UMTS system.

## Patentansprüche

1. Verfahren zum Kommunizieren einer Sitzungsinitiierungsprotokoll- und einer Sitzungsbeschreibungsprotokollnachricht, SIP/SDP, von einem Sender (510) an einen Empfänger (550) in einem Datenkommunikationssystem, das SIP/SDP verwendet, wobei das Verfahren die folgenden Schritte umfasst:
bei dem Empfänger (550), Vorspeichern mindestens eines Elementes der SIP/SDP-Nachricht in einem Cache-Speicher vor einer Übertragung der SIP/SDP-Nachricht von dem Sender (510), bei dem Sender (510), Entfernen mindestens eines Elementes von der SIP/SDP-Nachricht und Einfügen einer Anzeige (200) der Abwesenheit des mindestens einen entfernten Elementes in die SIP/SDP-Nachricht; und
bei dem Empfänger (550), Einfügen des mindestens einen Elementes, das bei dem Empfänger (550) gehalten wird, in eine SIP/SDP-Nachricht, die von dem Sender (510) empfangen wurde, als Ersatz für das mindestens eine Element, dessen Abwesenheit angezeigt wird; und
vor einem Übertragen der SIP/SDP-Nachricht von dem Sender (510), Empfangen einer vorbestimmten Tabelle einer Abbildung zwischen Elementen von SIP/SDP-Nachrichten und Anzeigen ihrer Abwesenheit bei dem Sender (510).

2. Verfahren nach Anspruch 1, wobei die Anzeige (200) einer Abwesenheit einen binären Header umfasst, in dem mindestens ein Bit die Anwesenheit/Abwesenheit des mindestens einen Elementes anzeigt.

3. Verfahren nach Anspruch 1 oder 2, wobei die Anzeige (200) einer Abwesenheit weiter eine Anzeige umfasst, ob eine weitere Anzeige einer Abwesenheit die Abwesenheit von mindestens einem weiteren Element umfasst.

4. Verfahren nach einem der vorhergehenden Ansprüche, wobei das Datenkommunikationssystem ein UMTS-System ist.

5. Sender (510), der verwendet wird, um von diesem eine Sitzungsinitiierungsprotokoll- und eine Sitzungsbeschreibungsprotokollnachricht, SIP/SDP, an einen Empfänger (550) in einem Datenkommunikationssystem zu kommunizieren, das SIP/SDP verwendet, wobei der Sender (510) umfasst:
Mittel zum Empfangen, vor einer Übertragung der SIP/SDP-Nachricht, einer vorbestimmten Tabelle einer Abbildung zwischen Elementen von SIP/SDP-Nachrichten und Anzeigen derer Abwesenheit;
Mittel zum Entfernen von mindestens einem Element von der SIP/SDP-Nachricht; und
Mittel zum Einfügen einer Anzeige (200) einer Abwesenheit des mindestens einen entfernten Elementes in die SIP/SDP-Nachricht.

6. Sender (510) nach Anspruch 6, wobei die Anzeige einer Abwesenheit einen binären Header umfasst, in dem mindestens ein Bit die Anwesenheit/Abwesenheit des mindestens einen Elementes anzeigt.

7. Sender (510) nach Anspruch 5 oder 6, wobei die Anzeige einer Abwesenheit weiter eine Anzeige umfasst, ob eine weitere Anzeige einer Abwesenheit die Abwesenheit mindestens eines weiteren Elementes anzeigt.

8. Sender (510) nach einem der Ansprüche 5 - 7, wobei das Datenkommunikationssystem ein UMTS-System ist.

9. Empfänger (550) zum Empfangen einer Sitzungsinitiierungsprotokoll- und Sitzungsbeschreibungsprotokollnachricht, SIP/SDP, von einem Sender (510) in einem Datenkommunikationssystem, das SIP/SDP verwendet, wobei der Empfänger (550) umfasst:
Mittel zum Vorspeichern in einem Cache-Speicher, vor einer Übertragung der SIP/SDP-Nachricht von dem Sender (510), mindestens eines Elementes der SIP/SDP-Nachricht bei dem Empfänger (550);
bei dem Empfänger (550), Mittel zum Empfangen einer SIP/SDP-Nachricht von dem Sender (510), einschließlich einer Anzeige (200) einer Abwesenheit mindestens eines Elementes von der empfangenen SIP/SDP-Nachricht; und Mittel zum Einfügen des mindestens einen bei dem Empfänger (550) gehaltenen Elementes in die empfangene SIP/SDP-Nachricht, als Ersatz für das mindestens eine Element, dessen Abwesenheit angezeigt wird; und
Mittel zum Senden einer vorbestimmten Tabelle einer Abbildung zwischen Elementen von SIP/SDP-Nachrichten und Anzeigen ihrer Abwesenheit an den Sender (510), vor einer Übertragung der SIP/SDP-Nachricht von diesem.

10. Empfänger (550) nach Anspruch 9, wobei die Anzeige (200) einer Abwesenheit eine binäre Kopfzeile umfasst, in der mindestens ein Bit die Anwesenheit/Abwesenheit des mindestens einen Elementes anzeigt.

11. Empfänger (550) nach Anspruch 9 oder 10, wobei die Anzeige (200) einer Abwesenheit weiter eine Anzeige umfasst, ob eine weitere Anzeige einer Abwesenheit die Abwesenheit mindestens eines weiteren Elementes anzeigt.

12. Empfänger (550) nach einem der Ansprüche 9 - 11, wobei das Datenkommunikationssystem ein UMTS-System ist.

## Revendications

1. Procédé de communication d'un message Session Initiation Protocol, c'est-à-dire un protocole de déclenchement de session, et d'un message Session Description Protocol, c'est-à-dire un protocole de description de session SIP/SDP depuis un émetteur (510) vers un récepteur (550) dans un système de communication de données utilisant le protocole SIP/SDP, le procédé comportant les étapes consistant à :
dans le récepteur (550), réaliser une mise préalable en mémoire cache d'au moins un élément du message SIP/SDP avant l'émission du message SIP/SDP par l'émetteur (510), dans l'émetteur (510) retirer du message SIP/SDP au moins un élément de ce message et insérer dans le message SIP/SDP une indication (200) de l'absence du au moins un élément retiré; et dans le récepteur (550), insérer dans un message SIP/SDP reçu de la part de l'émetteur (510) ledit au moins un élément retenu dans le récepteur (550) en remplacement dudit au moins un élément dont l'absence est indiquée; et
avant l'émission du message SIP/SDP à partir de l'émetteur (510), recevoir dans l'émetteur (510) une table prédéterminée de mappage entre des éléments de message SIP/SDP et des indications de leur absence.

2. Procédé selon la revendication 1, selon lequel l'indication (200) d'absence comprend un en-tête binaire, dans lequel au moins un bit indique la présence/l'absence d'au moins un élément.

3. Procédé selon la revendication 1 ou 2, selon lequel l'indication (200) d'absence comprend en outre une indication du fait qu'une autre indication d'absence indique l'absence d'au moins un autre élément.

4. Procédé selon l'une quelconque des revendications précédentes, selon lequel le système de communication de données est un système UMTS.

5. Emetteur (510) destiné à être utilisé dans la communication d'un message SIP/SDP de Session Initiation Protocol, c'est-à-dire protocole de déclenchement de session et d'un message Session Description Protocol, c'est-à-dire protocole de description de session, depuis cet émetteur vers un récepteur (510) dans un système de communication de données utilisant le protocole SIP/SDP, l'émetteur (510) comprenant :
des moyens pour recevoir, avant l'émission du message SIP/SDP, une table prédéterminée de mappage entre des éléments de messages SIP/SDP et des indications d'absence de tels messages;
des moyens pour retirer des messages SIP/SDP en au moins un élément de ce message; et
des moyens pour insérer dans le message SIP/SDP une indication (200) d'absence du au moins un élément retiré.

6. Emetteur (510) selon la revendication 6, dans lequel l'indication d'absence comprend un en-tête binaire dans lequel au moins un bit indique la présence/l'absence du au moins un élément.

7. Emetteur (510) selon la revendication 5 ou 6, dans lequel l'indication d'absence comporte en outre une indication du fait qu'une autre indication d'absence indique l'absence du au moins un autre élément.

8. Emetteur (510) selon l'une quelconque des revendications 5 à 7, dans lequel le système de communication de données est un système UMTS.

9. Récepteur (550) pour la réception d'un message SIP/SDP d'un Session Initiation Protocol, c'est-à-dire protocole de déclenchement de session et d'un message Session Description Protocol, c'est-à-dire un protocole de description de session, depuis un émetteur (510) dans un système de communication de données en utilisant le protocole SIP/SDP, le récepteur (550) comprenant :
des moyens pour, avant l'émission du message SIP/SDP à partir de l'émetteur (510), réaliser la mise préalable en mémoire cache d'au moins un élément du message SIP/SDP dans le récepteur (550);
dans le récepteur (550), des moyens pour recevoir à partir de l'émetteur (510), un message SIP/SDP incluant une indication (200) d'absence d'au moins un élément à partir du message SIP/SDP reçu; et
des moyens pour insérer dans le message SIP/SDP reçu ledit au moins un élément retenu dans le récepteur (550) à titre de remplacement dudit au moins un élément dont l'absence est indiquée; et
des moyens pour envoyer à l'émetteur (510), avant l'émission du message (SIP/SDP) à partir de ce dernier, une table prédéterminée de mappage entre des éléments de messages SIP/SDP et des indications d'absence de tels éléments.

10. Récepteur (550) selon la revendication 9, dans lequel l'indication (200) d'absence comprend un en-tête binaire dans lequel au moins un bit indique la présence/l'absence du au moins un élément.

11. Récepteur (550) selon la revendication 9 ou 10, dans lequel l'indication (200) d'absence comprend en outre une indication du fait qu'une autre indication d'absence indique l'absence d'au moins un autre élément.

12. Récepteur (550) selon l'une quelconque des revendications 9 à 11, dans lequel le système de communication de données est un système UMTS.
